# NEUE EUROPÄISCHE PATENTSCHRIFT

(11) **EP 3 110 543 B2**
(45) Veröffentlichungstag und Bekanntmachung des Hinweises auf die Entscheidung über den Einspruch: **14.08.2024**
(45) Hinweis auf die Patenterteilung: 20.12.2017
(21) Anmeldenummer: 15706222.5
(22) Anmeldetag: 23.02.2015
(51) Int. Cl.: B01J 20/12, B01J 20/22, B01J 20/30, C11B 3/10

(54) **TROCKEN MODIFIZIERTE, SÄUREAKTIVIERTE BLEICHERDE, VERFAHREN ZU DEREN HERSTELLUNG UND VERWENDUNG DIESER**
DRY MODIFIED, ACID ACTIVATED BLEACHING EARTH, PROCESS OF PRODUCTION AND USE THEREOF
TERRE DÉCOLORANTE MODIFIÉE À SEC ET ACTIVÉE À L'ACIDE, PROCÉDÉ DE PRODUCTION ET UTILISATION D'UNE TELLE TERRE DÉCOLORANTE

(30) Priorität: 28.02.2014 EP 14000725
(43) Veröffentlichungstag der Anmeldung: 04.01.2017
(73) Patentinhaber: Clariant International Ltd, 4132 Muttenz (CH)
(72) Erfinder: GEISSLER, Beate, 85368 Moosburg (DE); RUF, Friedrich, 84184 Tiefenbach (DE); CEBI, Hasan, Istanbul (TR); BESTING, Hubertus, 84100 Niederaichbach (DE)
(74) Vertreter: Jacobi, Markus Alexander
(86) Internationale Anmeldenummer: PCT/EP2015/053683
(87) Internationale Veröffentlichungsnummer: WO 2015/128273

(56) Entgegenhaltungen:
- WO-A1-96/33621
- WO-A1-99/02256

## Beschreibung

Die Erfindung betrifft ein Verfahren zur Herstellung einer Bleicherde, insbesondere einer trocken-modifizierten Bleicherde, eine nach dem Verfahren gewonnene Bleicherde, sowie deren Verwendung zur Bleichung von pflanzlichem oder tierischem Rohöl.

Bei der industriellen Herstellung von Ölen und Fetten werden Bleicherden zur Entfernung von Trübungen, Verfärbungen oder auch zur Entfernung von Oxidationsbeschleunigern verwendet. Durch die adsorptive Reinigung können Geschmack, Farbe und Lagerstabilität der Öle und Fette wesentlich verbessert werden. Zur Reinigung werden verschiedene Klassen von Bleicherden verwendet.

Eine erste Gruppe bildet die Klasse der hochaktiven, meist auf Montmorillonit basierenden Bleicherden (HPBE = high performance bleaching earth). Diese Gruppe umfasst insbesondere säureaktivierte Montmorillonite, wobei die Säureaktivierung in einem aufwändigen Verfahren durch Dealuminieren der Rohtone mit konzentrierten Säuren bei hohen Temperaturen durchgeführt wird. Bei diesem Verfahren wird ein Bleicherdeprodukt mit sehr großer spezifischer Oberfläche und großem Porenvolumen erhalten. Bereits der Einsatz geringer Mengen dieser hochaktiven Bleicherde führt zur merklichen Reinigung der Rohöle. Geringe Einsatzmengen im Bleichprozess sind deswegen erstrebenswert, weil die verbrauchte Bleicherde zum einen Restmengen an Öl bindet, wodurch die Ausbeute verringert wird, und zum anderen die gebrauchte Bleicherde, entsprechend geltenden Vorschriften, entsorgt werden muss.

Nachteilig an diesen hochaktiven Bleicherden ist die Tatsache, dass durch das Dealuminieren mit Säure während der Herstellung große Mengen an sauren salzreichen Abwässern anfallen, die nur in aufwändigen Prozessen aufbereitet oder entsorgt werden können. Die hohen Kosten für die Entsorgung der Abfälle sowie das aufwändige Produktionsverfahren begründen die vergleichsweise hohen Preise solcher hochaktiver Bleicherden.

Eine weitere Gruppe bildet die Klasse der naturaktiven Tone. Diese natürlich vorkommenden Bleicherden werden bereits seit Hunderten von Jahren für die Reinigung von Fetten und Ölen verwendet. Diese naturaktiven Systeme (auch Fuller's Earth oder Fuller-Erden genannt) können sehr kostengünstig zur Verfügung gestellt werden. Sie besitzen jedoch nur eine geringe Bleichkraft, so dass sie für die Reinigung von schwer zu bleichenden Ölen und Fetten meist nicht geeignet sind. Ferner müssen im Vergleich zu hochaktiven Bleicherden wesentlich größere Mengen des Adsorbens eingesetzt werden, um das gewünschte Bleichresultat zu erzielen. Dadurch müssen jedoch höhere Verluste an Öl bzw. Fett in Kauf genommen werden, da sich die Bleicherden nicht in reiner Form abtrennen lassen und gewissen Mengen an Öl bzw. Fett in der Bleicherde verbleiben.

Einen Kompromiss aus niedrigen Herstellkosten und akzeptabler Aktivität stellt die dritte Bleicherdeklasse dar, die sogenannten oberflächenaktivierten Systeme (SMBE = surface modified bleaching earth; oberflächenaktivierte Bleicherden). Hier wird ein naturaktiver Rohton mit geringen Säuremengen beaufschlagt und somit eine "in situ-Aktivierung" erreicht. Für dieses Verfahren haben sich insbesondere Attapulgit und Hormit enthaltende Rohtone bewährt. Diese weisen eine für natürliche Rohtone recht hohe spezifische Oberfläche von ca. 100 bis 180 m²/g und ein Porenvolumen von ca. 0,2 bis 0,35 ml/g auf. Da jedoch bei der Säureaktivierung gebildete Salze oder nicht abreagierte Anteile der Säuren nicht ausgewaschen werden, verbleiben diese auf dem Produkt und werden zumindest teilweise auch in den Poren abgelagert. Dadurch erreichen diese säureaktivierten Bleicherden in der Regel nicht die gleiche Effizienz, wie sie von hochaktiven Bleicherden (HPBE) erreicht wird, die durch Dealuminieren mit Säure hergestellt werden. Das einfache Herstellungsverfahren ermöglicht jedoch eine vergleichsweise kostengünstige Produktion, da keine sauren Abwässer anfallen.

WO 96/33621 offenbart die Herstellung von Bleicherden aus Tonmaterial mit einem Wassergehalt von höchstens 8 Gew.-% durch Vermahlen des Tons mit festen organischen Polycarbonsäuren.

WO 99/02256 beschreibt die Herstellung von Bleicherden aus Tonmaterial, wobei der Ton zunächst vorzugsweise auf einen Wassergehalt von 8 bis 10 Gew.-% getrocknet, danach mit einer konzentrierten Lösung einer anorganischen oder organischen Säure aktiviert und anschließend auf maximal 13 Gew. % Wassergehalt getrocknet wird.

Den oben genannten Bleicherdetypen ist gemeinsam, dass sie nach der Aktivierung bzw. vor der Verwendung auf einen möglichst geringen Wassergehalt (üblicherweise 8 bis 12 Gew.-%, typischerweise 10 Gew.-% oder weniger) getrocknet werden.

Haupteinsatzgebiet der Bleicherden ist die Raffination von Ölen und Fetten, hierbei natürlich die Bleichung. Nach dem Bleichen soll das raffinierte Öl bestimmte Anforderungen in Bezug auf Farbe, Geschmack und Haltbarkeit erfüllen. So darf das Öl nicht zu dunkel sein und, je nach Ölsorte, einen gelben bis grünen Farbton aufweisen. Ferner soll das Öl über einen längeren Zeitraum ohne Geschmacksverschlechterung haltbar sein, also nicht ranzig schmecken.

Bei der heute üblichen Aufbereitung wird das Öl nach dem Pressen zunächst entgast und getrocknet, um beispielsweise gelösten Sauerstoff zu entfernen. Anschließend werden Schleimstoffe, insbesondere Phospholipide, entfernt. Dazu wird das getrocknete und entgaste Öl mit Phosphorsäure versetzt und bei etwa 95°C und Normaldruck für etwa 15 bis 20 Minuten gerührt. Um die Schleimstoffe leichter abtrennen zu können, wird zum Ende der Entschleimung noch weiteres Wasser zugegeben, etwa in einem Anteil von 0,2 Gew.-%. Nach kurzem Rühren wird die Lezithinphase abgetrennt, beispielsweise durch Zentrifugieren. Das anschließende Bleichen des entschleimten Öls umfasst zwei Stufen, eine Nassbleichung sowie eine Vakuumbleichung. Zum Nassbleichen wird das entschleimte Öl mit 0,1 bis 0,5 Gew.-% Wasser versetzt und, nachdem das Öl auf 95°C erhitzt wurde, 0,3 bis 2 Gew.-% Bleicherde zugegeben. Die Mischung wird dann bei Normaldruck für etwa 20 Minuten gerührt. Anschließend wird Vakuum angelegt (beispielsweise 100 mbar) und das Öl für weitere 30 Minuten bei 95°C gerührt. Nach dem Bleichen wird die verbrauchte Bleicherde abgetrennt, beispielsweise indem die Mischung über eine mit einem Papierfilter belegte Nutsche filtriert wird.

Nach dem Bleichen wird das Öl noch desodoriert. Dazu wird überhitzter Wasserdampf, der eine Austrittstemperatur von etwa 200 bis 240°C auf weist, durch das Öl geleitet, um freie Fettsäuren sowie unangenehme Geschmacks- und Geruchsstoffe zu entfernen. Die Desodorierung wird im Vakuum bei einem Druck im Bereich von weniger als 5 mbar, vorzugsweise 1 bis 3 mbar, teilweise auch darunter, durchgeführt.

Nach der Raffination muss das Öl bestimmte Anforderungen in Bezug auf beispielsweise Farbe, Geschmack und Haltbarkeit erfüllen. Beispielsweise sollte das Öl nicht braun erscheinen sondern je nach Sorte einen gelben bis grünen Farbton aufweisen. Ein Maßstab hierfür ist die Lovibond-Farbzahl rot (FZ rot), welche möglichst niedrig sein sollte. Um die Haltbarkeit zu erhöhen, sollte das Öl einen sehr geringen Eisen- bzw. Phosphorgehalt aufweisen. Ferner sollte das Öl möglichst unempfindlich gegenüber Oxidation sein, um die Entwicklung eines ranzigen Geruchs und Geschmacks zu verhindern.

Neben der hohen Qualität des Öls soll die Raffination jedoch auch rationell und kostengünstig durchgeführt werden. Das oben geschilderte Verfahren hat sich zwar bei der kommerziellen Ölverarbeitung etabliert. Es besteht aber weiterhin ein Bedürfnis nach einer Optimierung der Ölraffination, sodass sich diese, ohne Einbußen bei der Qualität des Öls hinnehmen zu müssen, schneller und bei geringeren Kosten durchführen lässt.

Die aus EP 1893329 B1 oder EP 2099561 B1 bekannten Rohtone sind ein gutes Ausgangsmaterial für hochqualitative Bleicherden. Bislang werden daraus nach Umsetzung mit 3 % Schwefelsäure und Trocknung auf 10 Gew.-% Wassergehalt SMBE hoher Güte hergestellt. Nachteilig an der Herstellung dieser SMBE ist, dass der Rohton einen Wasseranteil von ca. 60 Gew.-% aufweist und mit diesem hohen Wasseranteil transportiert wird. Der Wasseranteil wird dann in der Produktion durch Erhitzen und Austreiben des Wassers auf 10 Gew.-% reduziert. Dies ist teuer und nicht ökologisch.

Eine Aufgabe der Erfindung war die Entwicklung einer effizienten Bleicherde, die diese Nachteile nicht aufweist.

Der Erfindung liegt insbesondere als Aufgabe zugrunde, ein Verfahren zur Herstellung eines Adsorptionsmittels, insbesondere einer Bleicherde zur Verfügung zu stellen, welches die Nachteile des Standes der Technik vermeidet und zu einem Produkt mit hohem Adsorptionsvermögen, insbesondere bezüglich der Bleichwirkung von Ölen und Fetten, führt.

Diese Aufgabe wird mit einem Verfahren mit den Merkmalen des Patentanspruchs 1 gelöst. Vorteilhafte Weiterbildungen des Verfahrens sind Gegenstand der abhängigen Unteransprüche.

Ein erster Gegenstand der Erfindung ist ein Verfahren zur Herstellung einer trocken-modifizierten Bleicherde, wobei zunächst ein wasserreicher Rohton auf einen reduzierten Wassergehalt getrocknet wird, der Rohton mit reduziertem Wassergehalt mit 1 - 5 Gew.-% (bezogen auf das Gewicht des Rohtons) einer festen organischen und/oder konzentrierten anorganischen Säure vermischt und vermahlen wird. Das erfindungsgemäße Verfahren zeichnet sich dadurch aus, dass die so erhaltene Bleicherde einen Wassergehalt von 20 bis 40 Gew.-% aufweist. Bei der Herstellung der erfindungsgemäßen Bleicherde kann folglich auf einen Trocknungsschritt nach dem Vermahlen des Rohtons mit der festen organischen und/oder konzentrierten anorganischen Säure verzichtet werden, wodurch die Herstellung insgesamt kostengünstig und weniger arbeitsintensiv ist als bei herkömmlichen Verfahren. Die nach dem erfindungsgemäßen Verfahren erhältlichen Bleicherden zeigen dennoch bei der Bleichung von Fetten oder Ölen hervorragende Ergebnisse, wie in den experimentellen Beispielen gezeigt.

Da das erfindungsgemäße Verfahren nur eine moderate Trocknung des Rohtons beinhaltet, kann vorteilhafterweise auf milde Trocknungsmethoden zurückgegriffen werden, die ohne großen technischen Aufwand und Energieverbrauch auskommen. Insbesondere hat sich gezeigt, dass der Rohton sonnengetrocknet werden kann, um den Wassergehalt von ursprünglich 50 bis 70 Gew.-% auf 20 bis 40 Gew.-% zu reduzieren. Der zu erreichende Restwassergehalt wird dabei durch die Dauer der Sonnentrocknung mitbestimmt, die typischerweise bei 1 bis 14 Tagen, bevorzugt unter 1 Woche und idealerweise bei 2 bis 4 Tagen liegt (abhängig von der Sonnenscheindauer und -intensität). Durch eine derartige Sonnentrocknung wird der effektive Anteil an festen Bestandteilen im Rohton erhöht, so dass schlussendlich bei gleicher Masse weniger Wasser transportiert wird und damit die Transportkosten (bezogen auf die festen Bestandteil des Rohtons) verringert werden.

Der wasserreiche Rohton weist vorzugsweise einen Wassergehalt von 50 bis 70 Gew.-% auf. Das erfindungsgemäße Verfahren kann jedoch auch für Rohtone mit anderen Wassergehalten, beispielsweise für Wassergehalte von mehr als 40 Gew.-% vorteilhaft eingesetzt werden.

Nach der Trocknung und Aktivierung mit fester organischer und/oder konzentrierter anorganischer Säure weist die Bleicherde idealerweise einen Wassergehalt von 30 bis 40 Gew.-% auf. Wassergehalte bis hinab zu ca. 20 Gew.-% sind jedoch ebenfalls erfindungsgemäß möglich. Der erfindungsgemäß erzielbare Vorteil der schonenden Trocknung der Rohtone und der Verzicht auf einen Trocknungsschritt nach dem Vermahlen des Rohtons mit der festen organischen und/oder konzentrierten anorganischen Säure lassen sich jedoch am besten realisieren, wenn die Rohtone auf den bevorzugten Bereich von 30 bis 40 Gew. % Wassergehalt getrocknet werden.

Das erfindungsgemäße Verfahren arbeitet vorteilhafterweise mit festen organischen Säuren, die ausgewählt sind aus der Gruppe umfassend Zitronensäure, Äpfelsäure und Weinsäure und/oder konzentrierten anorganischen Säuren wie insbesondere konzentrierter Schwefelsäure und/oder konzentrierter Phosphorsäure. Die Säuren können allein oder in beliebigen Mischungen untereinander vorliegen. Weinsäure hat sich bei der Bleichung von Pflanzenöl, insbesondere von Rapsöl, überraschend als besonders effektiv herausgestellt.

Der Anteil an fester organischer und/oder konzentrierter anorganischer Säure ist typischerweise im Bereich von 1 - 5 Gew.-% (bezogen auf das Gewicht des Rohtons), wobei ein Anteil von 1 - 3 Gew.-% sich als bevorzugt herausgestellt hat.

Der wasserreiche Rohton, der sich für das erfindungsgemäße Verfahren besonders eignet, enthält eine Smektit-Kieselgel-Mischphase. Besonders bevorzugt sind Rohtone, wie sie im Detail in EP 1893329 B1 und EP 2099561 B1 beschrieben sind. Auf die in diesen beiden Dokumenten beschriebenen Rohtone und ihre Charakterisierung und Eigenschaften wird hier ausdrücklich Bezug genommen, ebenso auf die experimentellen Details zur Ermittlung der chemischen und physikalischen Eigenschaften.

Ein weiterer Gegenstand der Erfindung ist eine Bleicherde, insbesondere eine trockenmodifizierte Bleicherde (engl.: Dry Modified Bleaching Earth, kurz: DMBE) erhältlich durch das oben näher beschriebene Verfahren, wobei der wasserreiche Rohton eine Smektit-Kieselgel-Mischphase enthält. Im Gegensatz zu Bleicherden nach dem Stand der Technik weist die erfindungsgemäße Bleicherde einen verhältnismäßig hohen Wassergehalt auf. Während im Stand der Technik Bleicherden aufwändig auf einen Wassergehalt von ca. 10 Gew.-% getrocknet werden, haben die erfindungsgemäßen Bleicherden Wassergehalte von 20 Gew. % und mehr, typischerweise bis zu 40 Gew. %. Überraschenderweise lassen sich Bleicherden mit solch hohen Wassergehalten problemlos zu typischen Bleicherdepartikelgrößen (Trockensiebrückstand auf 63 µm Sieb: 20 bis 40 Gew.-%; Trockensiebrückstand auf 25 µm Sieb: 40 bis 65 Gew.-%) vermahlen, ohne die Mahlwerke zu verkleben.

Ein weiterer Gegenstand der Erfindung ist die Verwendung der erfindungsgemäßen (insbesondere trocken-modifizierten) Bleicherde zur Raffination von Fetten und/oder Ölen, insbesondere von pflanzlichen Fetten und/oder Ölen. Die Raffination umfasst dabei vorzugsweise die Bleichung und gegebenenfalls die anschließende Desodorisierung, gefolgt von der Abtrennung der Bleicherde, insbesondere durch Filtration.

Schließlich ist ein Verfahren zur Raffination von Fetten und/oder Ölen ein weiterer Gegenstand der Erfindung. Dabei wird ein Rohöl bereitgestellt, welches aus pflanzlichem oder tierischem Material gewonnen ist. Das Rohöl wird einer Bleichung unterworfen, indem es mit einer erfindungsgemäßen (insbesondere trocken-modifizierten) Bleicherde behandelt wird. Das gebleichte Öl wird anschließend beispielsweise durch Filtration von der Bleicherde abgetrennt.

Als Ausgangsmaterial für das erfindungsgemäße Verfahren zur Herstellung einer insbesondere trocken-modifizierten Bleicherde, d. h. als wasserreicher Rohton, eignet sich insbesondere eine Smektit-Kieselgel-Mischphase, die sich durch eine sehr hohe spezifische Oberfläche von mehr als 120 m²/g, vorzugsweise mehr als 150 m²/g auszeichnet. Die Smektit-Kieselgel-Mischphase kann eine spezifische Oberfläche von bis zu 300 m²/g, bevorzugt bis zu 280 m²/g aufweisen. Ferner zeichnet sich die Smektit-Kieselgel-Mischphase durch ein sehr hohes Gesamtporenvolumen von mehr als 0,35 ml/g aus. Die Smektit-Kieselgel-Mischphase weist einen ungewöhnlich hohen Anteil einer Kieselgelphase auf und weist daher einen hohen Siliziumanteil, berechnet als SiO₂, von zumindest 60 Gew.-%, bevorzugt mehr als 63 Gew.-%, insbesondere bevorzugt mehr als 70 Gew.-% auf. Entsprechend einer Ausführungsform der Erfindung beträgt der Siliziumanteil der Smektit-Kieselgel-Mischphase weniger als 85 Gew.-%. Gemäß einer weiteren Ausführungsform beträgt der Siliziumanteil der Smektit-Kieselgel-Mischphase, berechnet als SiO₂, weniger als 75 Gew.-%. Solche erfindungsgemäß geeigneten wasserreichen Rohtone sind aus Sohling et al., Clay Minerals, (2009) 44, 525-537 und Emmerich et al., Clay Minerals, (2010) 45, 477-488 bekannt.

Für das erfindungsgemäße Verfahren zur Herstellung von insbesondere trocken-modifizierten Bleicherden sind insbesondere Rohtone geeignet, wie sie detailliert in EP 1 893 329 B1 und EP 2 099 561 B1 beschrieben sind. Auf die in diesen beiden Dokumenten beschriebenen Rohtone und ihre Charakterisierung und Eigenschaften wird hier ausdrücklich Bezug genommen, ebenso auf die experimentellen Details zur Ermittlung der chemischen und physikalischen Eigenschaften.

Überraschenderweise kann aus dem sonnengetrockneten Rohton eine Bleicherde erzeugt werden, die ohne einen weiteren Trocknungsschritt auskommt, also bei einem Wassergehalt von 20 - 40 % effektiv Fette und Öle zu bleichen in der Lage ist. Dies war nach dem aktuellen Stand der Technik nicht zu erwarten.

### BEISPIELE

Die Erfindung wird im Weiteren an Hand von Beispielen weiter erläutert.

Es wurden die folgenden Analysenmethoden und allgemeinen Herstell- und Testverfahren angewendet:

### Öl-Analytik:

Die Farbzahlen in Ölen (Lovibond-Farbzahlen) wurden gemäß AOCS Cc 13b-45 bestimmt. Die Chlorophyll A-Bestimmung erfolgte nach AOCS Cc 13d-55.

Aktivierung des Rohtons mit Schwefelsäure (Stand der Technik, für Vergleichszwecke): Der Rohton wird mit Wasser vermischt und anschließend mit 3 Gew.-% H₂SO₄ aktiviert. Hierzu werden 100 g auf ca. 10 % H₂O getrocknetes Rohton-Pulver mit 208 g Wasser und 2,83 g H₂SO₄ (96%-ig) in einem Becherglas innig vermengt. Das entstehende Gemisch wird bei 110°C auf einen Wassergehalt von ca. 10 % getro cknet und anschließend auf eine typische Bleicherdefeinheit vermahlen (Trockensiebrückstand auf 63 µm Sieb: 20 bis 40 Gew.-%; Trockensiebrückstand auf 25 µm Sieb: 40 bis 65 Gew.-%.)

Erfindungsgemäße Aktivierung des Rohtons mit fester organischer bzw. konzentrierter anorganischer Säure:
Der Rohton wird - sofern in den Beispiele nichts anderes angegeben - zunächst auf einen Wassergehalt von ca. 35 Gew.-% getrocknet anschließend mit 3 Gew.-% fester organischer bzw. konzentrierter anorganischer Säure innig vermengt und dadurch aktiviert. Anschließend wird auf eine typische Bleicherdefeinheit vermahlen (Trockensiebrückstand auf 63 µm Sieb: 20 bis 40 Gew.-%; Trockensiebrückstand auf 25 µm Sieb: 40 bis 65 Gew.-%).

### Bleichung von Pflanzenöl

Ein gegebenenfalls entschleimtes und entsäuertes Pflanzenöl wird - je nach verwendetem Öl - mit 0,30 - 1,60 Gew.-% Bleicherde bei 100-120°C für 20-30 Minuten unter einem Druck von 30-100 mbar gebleicht. Anschließend wird die Bleicherde abfiltriert und die Farbzahlen des Öls (FZ rot) mit Hilfe der Lovibond-Methode in einer 5¼" Küvette (sofern nicht anders angegeben) bestimmt. Ein Teil dieses Öls wird zusätzlich durch Wasserdampfbehandlung desodoriert (30 Minuten, bei 220-270°C, < 1 mbar). Auch das hierbei erhaltene Öl wird mit Hilfe der Lovibond-Methode analysiert. Die Werte nach der Desodorierung sind hierbei von besonderer Relevanz, da in der Praxis fast alle Öle nach der Bleichung desodoriert werden.

### Beispiel 1: Bleicherde aus sonnengetrocknetem Rohton zur Bleichung von Rapsöl

Ein auf 21,5 bzw. 26,2 bzw. 27,6 % Wassergehalt sonnengetrockneter Rohton (gemäß EP 1893392 B1) wurde jeweils mit 3 Gew.-% Zitronensäure homogenisiert, auf ca. 10 Gew.-% Wasser getrocknet und vermahlen, um 3 Muster einer Bleicherde zu erhalten. Rapsöl wurde mit 3 Mustern der oben beschriebenen Bleicherde und zum Vergleich mit einer qualitativ hochwertigen SMBE (Tonsil^{®} Supreme 112 FF, Clariant Produkte (Deutschland) GmbH) gebleicht. Hierzu wurde ein entschleimtes und entsäuertes Rapsöl mit 0,60 Gew.-% Bleicherde bei 110°C 30 Minuten unter einem Druck von 30 mbar gebleicht. Anschließend wurde die Bleicherde abfiltriert und die Farbzahlen (FZ) des Öls mit Hilfe der Lovibond-Methode in einer 5¼" Küvette bestimmt. Ein Teil dieses Öls wurde zusätzlich durch Wasserdampfbehandlung desodoriert (30 Minuten, 230°C, < 1 mbar). Auch das hierbei erhaltene Öl wurde mit Hilfe der Lovibond-Methode analysiert.

**Tabelle 1 gibt die Ergebnisse der Bleichungen wieder.**

| Tabelle 1 | | | | |
|---|---|---|---|---|
| Bleichung von Rapsöl | | | | |
| Probe | Bleichung | | Desodorisierung | |
| | FZ rot | Chlorophyll A (ppm) | FZ rot | Chlorophyll A (ppm) |
| Tonsil^{®} Supreme 112 FF | 1,4 | 0,03 | 0,6 | 0,04 |
| Muster 1.1 (26,2 Gew.-% Wasser, getrocknet auf 10 Gew.-%) | 6,0 | 0,02 | 0,3 | 0,018 |
| Muster 1.2 (21,5 Gew.-% Wasser, getrocknet auf 10 Gew.-%) | 5,8 | 0,01 | 0,3 | 0,016 |
| Muster 1.3 (27,6 Gew.-% Wasser, getrocknet auf 10 Gew.-%) | 4,6 | 0,01 | 0,3 | 0,018 |

Die mit fester Zitronensäure aktivierten Bleicherden erzielen bei der Bleiche von Rapsöl moderate Rotwerte (FZ rot 6.0 - 4.6 nach Lovibond AF 995), aber nach der Desodorisierung hervorragende Rotwerte (FZ rot 0.3) und sehr gute Chlorophyllentfernung (< 0.02 ppm). Dieses Beispiel zeigt, dass die Sonnentrocknung den Rohton nicht schädigt und hiermit gute Bleicherden (Muster 1.1 bis 1.3 als Vergleichsmuster) herstellbar sind.

### Beispiel 2: Filtrationsverhalten und Bleichung von Palmöl mit sonnengetrocknetem Rohton

3 Muster von auf ca. 35 Gew.-% Wassergehalt sonnengetrocknetem Rohton (gemäß EP 1893392 B1) wurden geteilt und jeweils die Hälfte bei 110°C auf einen Wassergehalt von ca. 9 Gew.-% getrocknet. Die wasserhaltigen und getrockneten Muster wurden getrennt hinsichtlich ihrer Filtrationszeit untersucht. Hierzu werden jeweils 10 g der Rohtonmuster zu 100 g rohem Leinöl gegeben und für 10 min bei 96,5°C gerührt. Die Rohton-Leinöl-Mischung wird danach über eine Nutsche filtriert und die Zeit erfasst, die benötigt wird, bis die gesamte sichtbare Oberfläche des Filterkuchens (im Wesentlichen Rohton) optisch trocken ist. Tabelle 2 zeigt die Ergebnisse.

| Tabelle 2 | | |
|---|---|---|
| Filtrationsverhalten | | |
| Probe | Wassergehalt (Gew.-%) | Filtrationszeit (s) |
| Muster 2.1 (erfindungsgemäß) | 32,3 | 51 |
| Muster 2.1 (Vergleichsmuster) | 9,0 | 73 |
| Muster 2.2 (erfindungsgemäß) | 34,8 | 50 |
| Muster 2.2 (Vergleichsmuster) | 8,9 | 65 |
| Muster 2.3 (erfindungsgemäß) | 36,8 | 50 |
| Muster 2.3 (Vergleichsmuster) | 9,0 | 64 |

Es wurde festgestellt, dass die nur sonnengetrockneten Materialien bessere (d.h. kürzere) Filtrationszeiten aufwiesen als die herkömmlich auf einen niedrigeren Wassergehalt getrockneten Materialien und folglich das Abtrennen der Bleicherde vom Öl bei sonnengetrockneten Materialien verbessert ist.

**Tabelle 3 zeigt die Ergebnisse für die FZ rot nach Bleichung und Desodorisierung von Palmöl für die Bleicherde Muster 2.2 (feucht mit 34,8 % Wasser, trocken mit 8,9 % Wasser) im Vergleich zu einer SMBE (Tonsil^{®} Supreme 112 FF, Clariant Produkte (Deutschland) GmbH)**

| Tabelle 3 | | |
|---|---|---|
| Bleichung von Palmöl (20 min Bleichung mit 1,6 Gew.-% Bleicherde, 0,02 % H₃PO₄ bei 120°C und 100 mbar; 120 min Desodorisierung bei 240-270°C und < 1 mbar)) | | |
| Probe | Bleichung | Desodorisierung |
| | FZ rot (¼" Küvette) | FZ rot (5¼" Küvette) |
| Tonsil^{®} Supreme 112 FF (Vergleichsmaterial) | 7,4 | 2,5 |
| Muster 2.2 (34,8 % Wasser) (erfindungsgemäß) | 17,9 | 2,1 |
| Muster 2.2 (8,9 % Wasser) (Vergleichsmuster) | 15,6 | 2,1 |

In der Bleiche von Palmöl zeigten sonnengetrocknete (Restwassergehalt 34,8 %) und auf ca. 9 Gew.-% Wassergehalt getrocknete Rohtone identische Ergebnisse - obwohl die sonnengetrockneten Materialien bei gleicher Dosierung weniger aktives Material aufweisen (also im Grunde "verdünnter" sind). Auch im Vergleich zur SMBE Tonsil^{®} Supreme 112 FF (als Vertreter für hochqualitative Standardbleicherden) zeigte der sonnengetrocknete Ton nach der Desodorisierung hervorragende Ergebnisse.

### Beispiel 3: Bleichwirkung für verschiedene Pflanzenöle

Die Rohtone von Beispiel 2 wurden zusätzlich durch Zusatz von 3% Zitronensäure (H₃Cit) und Vermischen bis zum Erreichen einer homogenen Masse zu DMBE verarbeitet und die Bleichwirkung bei verschiedenen Pflanzenölen (Olivenöl, Sojaöl, Rapsöl, Sonnenblumenöl) getestet. Wieder wurde der Vergleich sonnengetrocknetes Material (34,8 % Wassergehalt) mit "normal" getrocknetem Material (8,9 % Wassergehalt) und einer SMBE (Tonsil^{®} Supreme 112 FF, Clariant Produkte (Deutschland) GmbH) gezogen. Die experimentellen Details und die Ergebnisse sind in den Tabellen 4 bis 7 zusammengefasst.

| Tabelle 4 | | | | |
|---|---|---|---|---|
| Bleichung von Olivenöl (30 min Bleichung mit 1,50 Gew.-% Bleicherde bei 110°C und 30 mbar; 60 min Desodorisierung bei 240°C und < 1*10⁻³ mbar) | | | | |
| Probe | Bleichung | | Desodorisierung | |
| | FZ rot | Chlorophyll A (ppm) | FZ rot | Chlorophyll A (ppm) |
| Tonsil^{®} Supreme 112 FF (Vergleichsmaterial) | 2,6 | 0,05 | 2,3 | 0,00 |
| Muster 2.2 (8,9 % Wasser) + 3 Gew.-% H₃Cit (Vergleichsm uster) | 2,1 | 0,1 | 1,6 | 0,01 |
| Muster 2.2 (34,8 % Wasser) + 3 Gew.-% H₃Cit (erfindungsgemäß) | 3,1 | 0,19 | 2,2 | 0,14 |

| Tabelle 5 | | | | |
|---|---|---|---|---|
| Bleichung von Sojaöl (30 min Bleichung mit 0,30 Gew.-% Bleicherde bei 100°C und 30 mbar; 30 min Desodorisierung bei 220°C und < 1 mbar) | | | | |
| Probe | Bleichung | | Desodorisierung | |
| | FZ rot | Chlorophyll A (ppm) | FZ rot | Chlorophyll A (ppm) |
| Tonsil^{®} Supreme 112 FF (Vergleichsmaterial) | 5,4 | 0,11 | 0,8 | 0,10 |
| Muster 2.2 (8,9 % Wasser) + 3 Gew.-% H₃Cit (Vergleichsmuster) | 16,6 | 0,07 | 0,6 | 0,07 |
| Muster 2.2 (34,8 % Wasser) + 3 Gew.-% H₃Cit (erfindungsgemäß) | 16,3 | 0,12 | 1,0 | 0,11 |

| Tabelle 6 | | | | |
|---|---|---|---|---|
| Bleichung von Rapsöl (30 min Bleichung mit 0,60 Gew.-% Bleicherde bei 110°C und 30 mbar; 30 min Desodorisierung bei 230°C und < 1 mbar) | | | | |
| Probe | Bleichung | | Desodorisierung | |
| | FZ rot | Chlorophyll A (ppm) | FZ rot | Chlorophyll A (ppm) |
| Tonsil^{®} Supreme 112 FF (Vergleichsmaterial) | 1,4 | 0,03 | 0,6 | 0,04 |
| Muster 2.2 (8,9 % Wasser) + 3 Gew.-% H₃Cit (Vergleichsmuster) | 8,2 | 0,03 | 0,4 | 0,03 |
| Muster 2.2 (34,8 % Wasser) + 3 Gew.-% H₃Cit (erfindungsgemäß) | 3,1 | 0,04 | 0,4 | 0,04 |

| Tabelle 7 | | | | |
|---|---|---|---|---|
| Bleichung von Sonnenblumenöl (30 min Bleichung mit 1,00 Gew.-% Bleicherde bei 100°C und 100 mbar; 60 min Desodorisierung bei 240°C und < 1*10⁻³ mbar) | | | | |
| Probe | Bleichung | | Desodorisierung | |
| | FZ rot | Chlorophyll A (ppm) | FZ rot | Chlorophyll A (ppm) |
| Tonsil^{®} Supreme 112 FF (Vergleichsmaterial) | 1,4 | 0,01 | 1,3 | 0,002 |
| Muster 2.2 (8,9 % Wasser) + 3 Gew.-% H₃Cit (Vergleichsmuster) | 1,6 | 0,01 | 1,2 | 0,004 |
| Muster 2.2 (34,8 % Wasser) + 3 Gew.-% H₃Cit (erfindungsgemäß) | 1,8 | 0,06 | 1,3 | 0,03 |

Das erfindungsgemäße Produkt (d.h. die Dry-modified Bleaching Earth DMBE mit dem hohen Restwassergehalt von 34,8 %) zeigte dabei überraschend gute bis sehr gute Werte nach der Desodorisierung.

### Beispiel 4: Bleichwirkung für verschiedene Restwassergehalte

Hier wurde das Verhalten des Produktes mit höherem Wassergehalt gegenüber dem in Mitteleuropa wichtigen Rapsöl untersucht. Der Wassergehalt wurde zwischen 8.9 und 34.8 % variiert und überraschenderweise ergab sich, dass die Bleichwirkung mit zunehmendem Wassergehalt besser wurde (abnehmender Rotwert). Nach der Desodorisierung lagen alle Rotwerte - unabhängig von Wassergehalt - auf hervorragendem Niveau.

Die Rohtone von Beispiel 2 wurde zusätzlich durch Zusatz von 3% Zitronensäure (H₃Cit) wie in Beispiel 3 beschrieben zu DMBE verarbeitet und die Bleichwirkung für Rapsöl getestet. Wieder wurde der Vergleich sonnengetrocknetes Material (21 bis 34,8 % Wassergehalt) mit "normal" getrocknetem Material (8,9 % Wassergehalt) und einer HPBE (Tonsil^{®} Supreme 112 FF, Clariant Produkte (Deutschland) GmbH) gezogen. Die experimentellen Details und die Ergebnisse sind in Tabelle 8 zusammengefasst.

| Tabelle 8 | | | | |
|---|---|---|---|---|
| Bleichung von Rapsöl (30 min Bleichung mit 0,60 Gew.-% Bleicherde bei 110°C und 30 mbar; 30 min Desodorisierung bei 230°C und < 1 mbar) | | | | |
| Probe | Bleichung | | Desodorisierung | |
| | FZ rot | Chlorophyll A (ppm) | FZ rot | Chlorophyll A (ppm) |
| Tonsil^{®} Supreme 112 FF (Vergleichsmaterial) | 1,4 | 0,03 | 0,6 | 0,04 |
| Muster 2.2 (8,9 % Wasser) + 3 Gew.-% H₃Cit (Vergleichsmuster) | 8,2 | 0,03 | 0,4 | 0,03 |
| Muster 2.2 (21,0 % Wasser) + 3 Gew.-% H₃Cit (erfindungsgemäß) | 4,0 | 0,02 | 0,4 | 0,03 |
| Muster 2.2 (25,3 % Wasser) + 3 Gew.-% H₃Cit (erfindungsgemäß) | 3,6 | 0,02 | 0,4 | 0,02 |
| Muster 2.2 (30,5 % Wasser) + 3 Gew.-% H₃Cit (erfindungsgemäß) | 3,3 | 0,02 | 0,4 | 0,03 |
| Muster 2.2 (34,8 % Wasser) + 3 Gew.-% H₃Cit (erfindungsgemäß) | 3,1 | 0,04 | 0,4 | 0,04 |

### Beispiel 5: Bleichwirkung für unterschiedliche Säureaktivierung

Analog zu Beispiel 3 wurde der Rohton mit verschiedenen festen organischen Säuren aktiviert. Der Rohton wurde durch Zusatz von 3% fester organischer Säure (Zitronensäure, Äpfelsäure, Weinsäure) zu DMBE verarbeitet und die Bleichwirkung für Rapsöl getestet. Wieder wurde der Vergleich sonnengetrocknetes Material (34,8 % Wassergehalt) mit "normal" getrocknetem Material (8,9 % Wassergehalt) und einer HPBE (Tonsil^{®} Supreme 112 FF, Clariant Produkte (Deutschland) GmbH) gezogen. Die experimentellen Details und die Ergebnisse sind in Tabelle 9 zusammengefasst.

| Tabelle 9 | | | | |
|---|---|---|---|---|
| Bleichung von Rapsöl (30 min Bleichung mit 0,60 Gew.-% Bleicherde bei 110°C und 30 mbar; 30 min Desodorisierung bei 230°C und < 1 mbar) | | | | |
| Probe | Bleichung | | Desodorisierung | |
| | FZ rot | Chlorophyll A (ppm) | FZ rot | Chlorophyll A (ppm) |
| Tonsil^{®} Supreme 112 FF (Vergleichsmaterial) | 1,4 | 0,03 | 0,6 | 0,04 |
| Muster 2.2 (8,9 % Wasser) + 3 Gew.-% Zitronensäure (Vergleichsmuster) | 8,2 | 0,03 | 0,4 | 0,03 |
| Muster 2.2 (34,8 % Wasser) + 3 Gew.-% Zitronensäure (erfindungsgemäß) | 3,1 | 0,04 | 0,4 | 0,04 |
| Muster 2.2 (8,9 % Wasser) + 3 Gew.-% Äpfelsäure (Vergleichsmuster) | 3,8 | 0,01 | 0,4 | 0,03 |
| Muster 2.2 (34,8 % Wasser) + 3 Gew.-% Äpfelsäure (erfindungsgemäß) | 2,7 | 0,03 | 0,6 | 0,04 |
| Muster 2.2 (8,9 % Wasser) + 3 Gew.-% Weinsäure (Vergleichsmuster) | 4,7 | 0,01 | 0,4 | 0,02 |
| Muster 2.2 (34,8 % Wasser) + 3 Gew.-% Weinsäure (erfindungsgemäß) | 1,7 | 0,02 | 0,5 | 0,03 |

Es wurde überraschenderweise gefunden, dass die Bleichwirkung durch Substitution der Zitronensäure durch Äpfel- und speziell Weinsäure deutlich verbessert werden konnte. Die Verbesserung war weitaus stärker beim sonnengetrockneten Material (34.8 % Wasser) ausgeprägt als beim Produkt mit normalem Wassergehalt (8.9 % Wasser). Der höhere Wassergehalt fördert überraschenderweise die Bleichwirkung der DMBE.

## Patentansprüche

1. Verfahren zur Herstellung einer Bleicherde umfassend die Schritte
- Trocknung eines wasserreichen Rohtons auf einen reduzierten Wassergehalt,
- Vermischen des Rohtons mit reduziertem Wassergehalt mit 1-5 Gew.-% (bezogen auf Gewicht des Rohtons) einer festen organischen und/oder konzentrierten anorganischen Säure,
- Vermahlen des Gemischs aus Rohton mit reduziertem Wassergehalt und fester organischer und/oder konzentrierter anorganischer Säure,
**dadurch gekennzeichnet, dass** die Bleicherde einen Wassergehalt von 20 bis 40 Gew.-% aufweist.

2. Verfahren gemäß Anspruch 1, **dadurch gekennzeichnet, dass** der wasserreiche Rohton einen Wassergehalt von 50 bis 70 Gew.-% aufweist.

3. Verfahren gemäß Anspruch 1 oder 2, **dadurch gekennzeichnet, dass** die Bleicherde einen Wassergehalt von 30 bis 40 Gew.-% aufweist.

4. Verfahren gemäß einem der Ansprüche 1 bis 3, **dadurch gekennzeichnet, dass** die feste organische Säure ausgewählt ist aus der Gruppe umfassend Zitronensäure, Äpfelsäure und Weinsäure.

5. Verfahren gemäß einem der Ansprüche 1 bis 3, **dadurch gekennzeichnet, dass** die konzentrierte anorganische Säure ausgewählt ist aus der Gruppe umfassend Schwefelsäure und Phosphorsäure.

6. Verfahren gemäß einem der Ansprüche 1 bis 5, **dadurch gekennzeichnet, dass** der Anteil an fester organischer Säure bzw. konzentrierter anorganischer Säure 1 - 3 Gew.-% bezogen auf das Gewicht des Rohtons ist.

7. Verfahren gemäß einem der Ansprüche 1 bis 6, **dadurch gekennzeichnet, dass** der wasserreiche Rohton eine Smektit-Kieselgel-Mischphase enthält.

8. Bleicherde erhältlich durch das Verfahren gemäß Anspruch 7.

9. Verwendung der Bleicherde gemäß Anspruch 8 zur Raffination von Fetten und/oder Ölen.

10. Verfahren zur Raffination von Fetten und/oder Ölen, wobei
- ein Rohöl bereitgestellt wird, welches aus pflanzlichen oder tierischem Material gewonnen ist,
- das Rohöl einer Bleichung unterworfen wird, indem es mit einer Bleicherde gemäß Anspruch 8 behandelt wird, und
- das gebleichte Öl von der Bleicherde abgetrennt wird.

## Claims

1. Process for producing a bleaching earth, comprising the steps of
- drying a water-rich raw clay to a reduced water content,
- mixing the raw clay having a reduced water content with 1%-5% by weight (based on the weight of the raw clay) of a solid organic and/or concentrated inorganic acid,
- grinding the mixture of raw clay having a reduced water content and solid organic and/or concentrated inorganic acid,
**characterized in that** the bleaching earth has a water content of 20% to 40% by weight.

2. Process according to Claim 1, **characterized in that** the water-rich raw clay has a water content of 50% to 70% by weight.

3. Process according to Claim 1 or 2, **characterized in that** the bleaching earth has a water content of 30% to 40% by weight.

4. Process according to any of Claims 1 to 3, **characterized in that** the solid organic acid is selected from the group comprising citric acid, malic acid and tartaric acid.

5. Process according to any of Claims 1 to 3, **characterized in that** the concentrated inorganic acid is selected from the group comprising sulfuric acid and phosphoric acid.

6. Process according to any of Claims 1 to 5, **characterized in that** the proportion of solid organic acid or concentrated inorganic acid is 1%-3% by weight, based on the weight of the raw clay.

7. Process according to any of Claims 1 to 6, **characterized in that** the water-rich raw clay contains a mixed smectite-silica gel phase.

8. Bleaching earth obtainable by the process according to Claims 7.

9. Use of the bleaching earth according to Claim 8 for refining of fats and/or oils.

10. Method of refining fats and/or oils, wherein
- a crude oil obtained from vegetable or animal material is provided,
- the crude oil is subjected to bleaching by treating it with a bleaching earth according to Claim 8, and
- the bleached oil is separated from the bleaching earth.

## Revendications

1. Procédé de fabrication d'une terre décolorante comprenant les étapes suivantes :
- le séchage d'une argile brute riche en eau à une teneur en eau réduite,
- le mélange de l'argile brute à teneur en eau réduite avec 1 à 5 % en poids (par rapport au poids de l'argile brute) d'un acide organique solide et/ou inorganique concentré,
- le broyage du mélange de l'argile brute à teneur en eau réduite et de l'acide organique solide et/ou inorganique concentré, **caractérisé en ce que** la terre décolorante présente une teneur en eau de 20 à 40 % en poids.

2. Procédé selon la revendication 1, **caractérisé en ce que** l'argile brute riche en eau présente une teneur en eau de 50 à 70 % en poids.

3. Procédé selon la revendication 1 ou 2, **caractérisé en ce que** la terre décolorante présente une teneur en eau de 30 à 40 % en poids.

4. Procédé selon l'une quelconque des revendications 1 à 3, **caractérisé en ce que** l'acide organique solide est choisi dans le groupe constitué par l'acide citrique, l'acide malique et l'acide tartrique.

5. Procédé selon l'une quelconque des revendications 1 à 3, **caractérisé en ce que** l'acide inorganique concentré est choisi dans le groupe constitué par l'acide sulfurique et l'acide phosphorique.

6. Procédé selon l'une quelconque des revendications 1 à 5, **caractérisé en ce que** la proportion d'acide organique solide ou d'acide inorganique concentré est de 1 à 3 % en poids, par rapport au poids de l'argile brute.

7. Procédé selon l'une quelconque des revendications 1 à 6, **caractérisé en ce que** l'argile brute riche en eau contient une phase mixte smectite-gel de silice.

8. Terre décolorante pouvant être obtenue par le procédé selon la revendication 7.

9. Utilisation de la terre décolorante selon la revendication 8 pour le raffinage de graisses et/ou d'huiles.

10. Procédé de raffinage de graisses et/ou d'huiles, selon lequel
- une huile brute est préparée, qui est obtenue à partir d'une matière végétale ou animale,
- l'huile brute est soumise à une décoloration par traitement avec une terre décolorante selon la revendication 8, et
- l'huile blanchie est séparée de la terre décolorante.
